# EUROPEAN PATENT SPECIFICATION

(11) **EP 3 211 690 B1**
(45) Date of publication and mention of the grant of the patent: **02.09.2020**
(21) Application number: 15852731.7
(22) Date of filing: 20.10.2015
(51) Int. Cl.: H01M 2/10, H01M 2/20, H01M 2/30

(54) **POWER STORAGE MODULE**
LEISTUNGSSPEICHERMODUL
MODULE DE STOCKAGE D'ÉNERGIE

(30) Priority: 21.10.2014 JP 2014214520
(43) Date of publication of application: 30.08.2017
(73) Proprietor: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: KUBOKI Hideyuki, Yokkaichi-shi Mie 510-8503 (JP); HIRAI Hiroki, Yokkaichi-shi Mie 510-8503 (JP); SAKATA Tomoyuki, Yokkaichi-shi Mie 510-8503 (JP); HIGASHIKOZONO Makoto, Yokkaichi-shi Mie 510-8503 (JP); NAKAGAWA Kenji, Yokkaichi-shi Mie 510-8503 (JP)
(74) Representative: Fédit-Loriot
(86) International application number: PCT/JP2015/079524
(87) International publication number: WO 2016/063854

(56) References cited:
- WO-A1-2012/090744
- WO-A1-2014/057756
- WO-A1-2014/109101
- JP-A- H0 922 735
- JP-A- 2004 031 270
- JP-A- 2005 116 441
- JP-A- 2006 185 733
- JP-A- 2006 210 312
- JP-A- 2008 146 943
- JP-A- 2008 147 045
- JP-A- 2011 222 230
- JP-A- 2013 182 724
- US-A1- 2014 134 464

## Description

### Technical Field

The present invention relates to an electricity storage module.

### Background Art

In general, electricity storage modules mounted on electric cars or hybrid vehicles are, for example, constituted by connecting multiple power storage elements in series or in parallel with each other (see Patent Document 1, for example). This electricity storage module includes a detection terminals for detecting the states of the power storage elements.

### Citation List

### Patent Documents

Patent Document 1: JP 2014-78365A

### Summary of Invention

### Technical Problem

In the above-described electricity storage module in Patent Document 1, the detection terminals are connected by welding them to lead terminals of cathodes or anodes that protrude from an end portion of the power storage elements, while the detection terminals are held by a holding member.

In the electricity storage module having such a configuration, if the number of power storage elements that constitute the electricity storage module increases, the number of detection terminals connected to the power storage elements also increases, and this has been problematic in that the operation for connecting the lead terminals and the detection terminals is time-consuming.

An object of the present invention is to provide an electricity storage module in which the operation for connecting a detection terminal and a power storage element is simplified.

### Solution to Problem

The present invention is an electricity storage module including a power storage element group obtained by stacking a plurality of power storage elements each having a lead terminal that protrudes from a side edge, in which the lead terminals are each provided with a terminal connection portion for electrically connecting the lead terminals that are adjacent in a direction in which the power storage elements are stacked and a detection terminal portion that is electrically connectable to a device for detecting and controlling states of the respective power storage element.

In the present invention, the lead terminal is provided with the terminal connection portion for electrically connecting adjacent lead terminals and the detection terminal portion for detecting a state of the power storage element, and thus it is not necessary to prepare a separate detection terminal and the operation for connecting a lead terminal and a detection terminal is not required.

As a result, according to the present invention, it is possible to provide an electricity storage module in which the operation for connecting a detection terminal and a power storage element is simplified.

The present invention may have the following configurations.

A configuration may be adopted in which the detection terminal portions of the lead terminals and terminals of the device that is to be electrically connected to the detection terminal portions are made of the same metal material.

With such a configuration, a problem of corrosion caused by contact between different metals does not easily arise in a portion of contact between the detection terminal portion of the lead terminal and the terminal of the device.

A configuration may be adopted in which the electricity storage module includes holding members for holding the lead terminals of the power storage elements, and the holding members are provided with terminal accommodation portions in which the detection terminal portions and the terminals of the device are accommodated in a fitted state.

With such a configuration, the detection terminal portion of the lead terminal is accommodated in the terminal accommodation portion of the holding member, and the power storage element and the device are electrically connected by inserting the terminal of the device into the terminal accommodation portion and fitting the terminal to the detection terminal portion. Therefore, it is possible to further simplify the operation for connecting the power storage element and the device.

A configuration may be adopted in which the electricity storage module includes a bus bar for electrically connecting the lead terminals of the power storage elements that are adjacent in the direction in which the power storage elements are stacked, and a lead connection portion of the bus bar, which is electrically connected to the terminal connection portion of the lead terminal, is made of the same metal material as the terminal connection portion of the lead terminal.

With such a configuration, a problem of corrosion caused by contact between different metals does not easily arise in a portion of contact between the terminal connection portion of the lead terminal and the lead connection portion of the bus bar.

### Advantageous Effects of Invention

According to the present invention, it is possible to provide an electricity storage module in which the operation for connecting a detection terminal and a power storage element is simplified.

### Brief Description of Drawings

FIG. 1 is a perspective view of a stacked object that is a part of an electricity storage module of Embodiment 1.
FIG. 2 is a perspective view of the stacked object shown in a direction different from that in FIG. 1.
FIG. 3 is an exploded perspective view of the stacked object.
FIG. 4 is a plan view of the stacked object.
FIG. 5 is a cross-sectional view taken along line A-A in FIG. 4.
FIG. 6 is a cross-sectional view of a part of a left end portion (X portion) in FIG. 5.
FIG. 7 is a cross-sectional view of a part of a right end portion (Y portion) in FIG. 5.
FIG. 8 is a cross-sectional view taken along line B-B in FIG. 4.
FIG. 9 is an enlarged cross-sectional view of main portions in FIG. 8.
FIG. 10 is a cross-sectional view taken along line C-C in FIG. 4.
FIG. 11 is an enlarged cross-sectional view of main portions in FIG. 10.
FIG. 12 is a cross-sectional view taken along line D-D in FIG. 4.
FIG. 13 is an enlarged cross-sectional view of main portions in FIG. 12.
FIG. 14 is a plan view of a power storage unit (first power storage unit) in the lowermost level (first level from the bottom).
FIG. 15 is a cross-sectional view taken along line E-E in FIG. 14.
FIG. 16 is a perspective view of the first power storage unit.
FIG. 17 is an exploded perspective view of the first power storage unit.
FIG. 18 is a perspective view of a part of the first power storage unit from which a first holding member is omitted.
FIG. 19 is a perspective view of a part of the first power storage unit shown from its back side.
FIG. 20 is a perspective view of the first holding member.
FIG. 21 is a plan view of a power storage unit (third power storage unit) in the third level from the bottom.
FIG. 22 is a cross-sectional view taken along line F-F in FIG. 21.
FIG. 23 is a perspective view of the third power storage unit.
FIG. 24 is an exploded perspective view of the third power storage unit.
FIG. 25 is a perspective view of a part of the third power storage unit from which a third holding member is omitted.
FIG. 26 is a perspective view of a part of the third power storage unit shown from its back side.
FIG. 27 is a perspective view of a third holding member.

### Description of Embodiments

### Embodiment 1

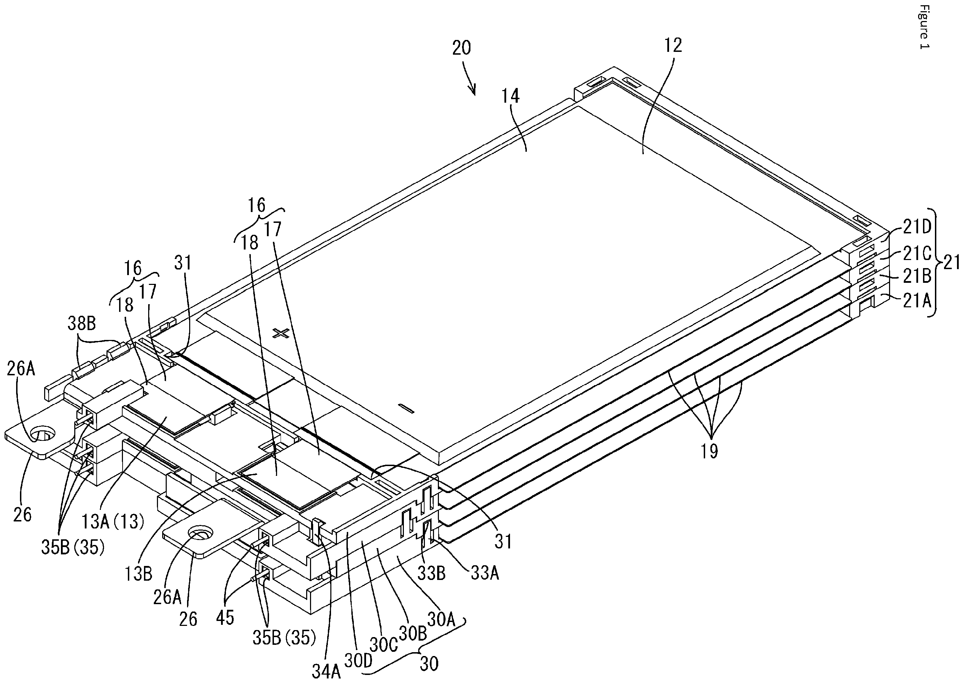

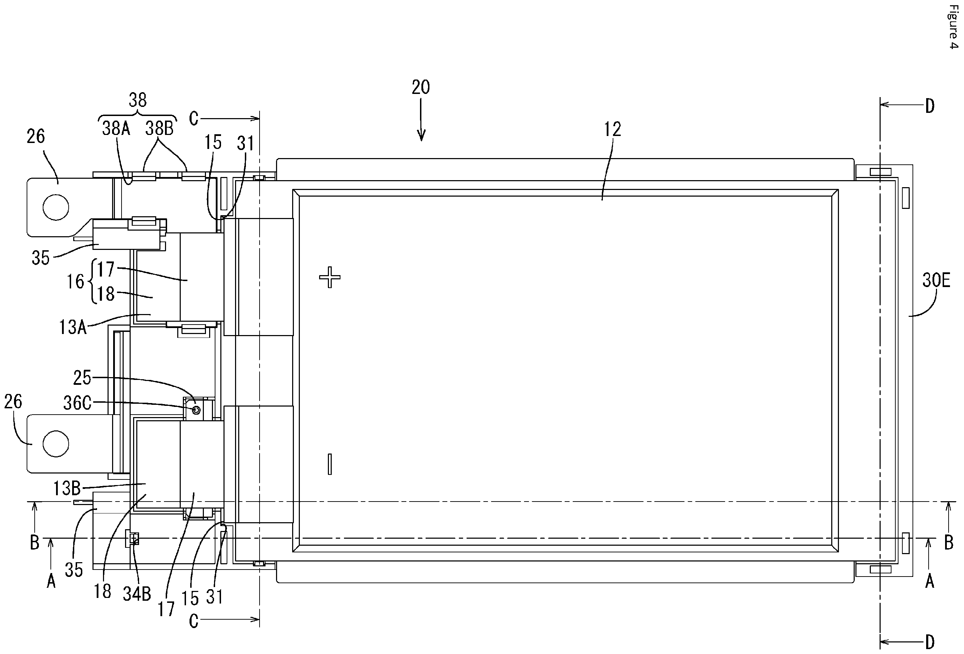

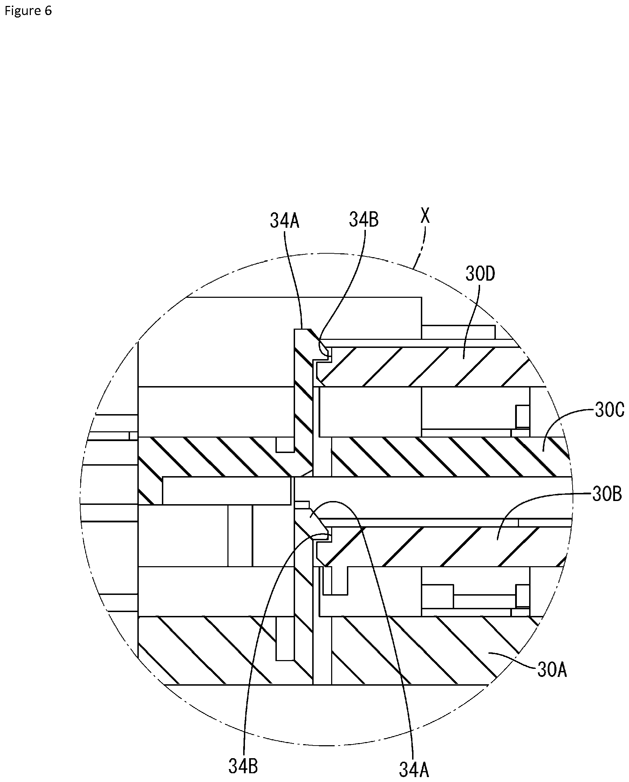

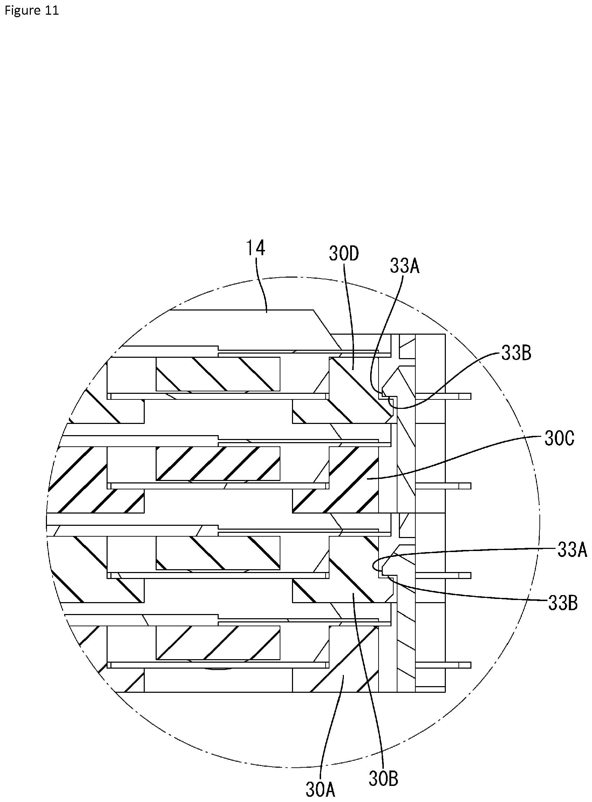

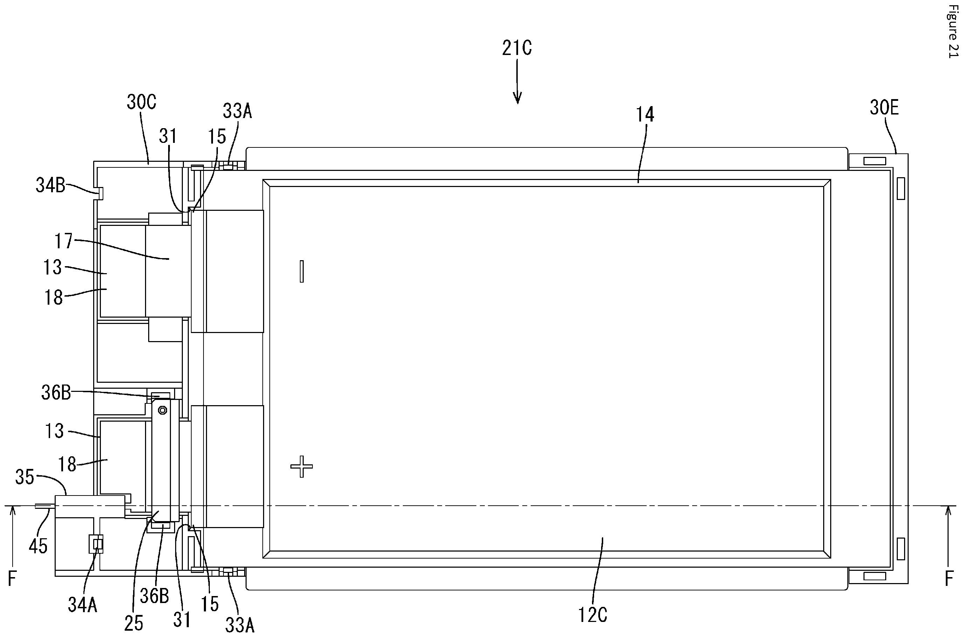

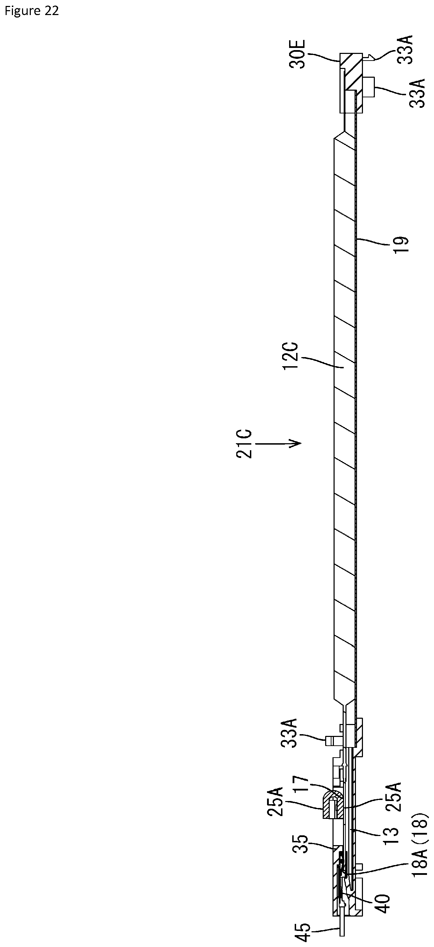

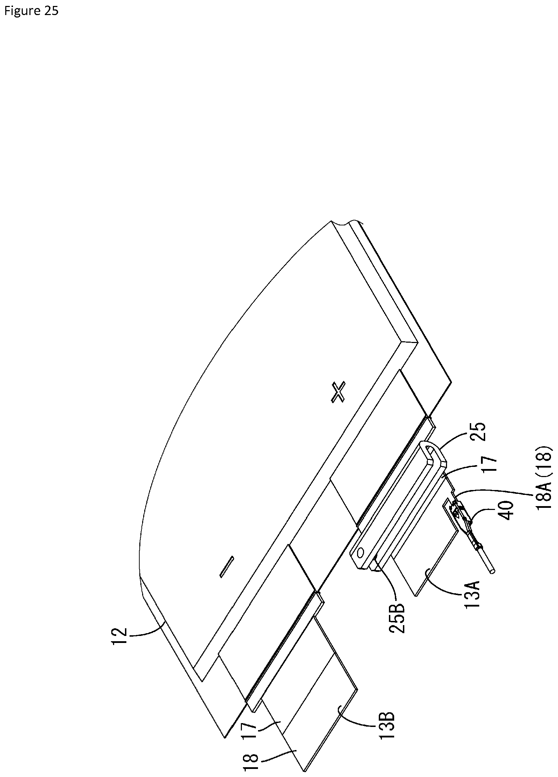

Embodiment 1 of the present invention will be described with reference to FIGS. 1 to 27. In the drawings, reference signs may be given to one of a plurality of the same members, and reference signs may be omitted from the other same members. In the following description, the terms "front" and "back" respectively refer to the left side and right side of FIG. 4.

An electricity storage module of the present embodiment includes a power storage element group 11 obtained by stacking a plurality of power storage elements 12 (four in the present embodiment) having lead terminals 13 protruding from their side edges. In the present embodiment, as shown in FIG. 1, the power storage elements 12 that constitute the power storage element group 11 are stacked in a state in which the power storage elements 12 are placed on heat transfer members 19 to which holding members 30 are attached. A power storage unit 21 is obtained by placing a power storage element 12 on a heat transfer member 19 to which a holding member 30 is attached, and a stacked object 20 is obtained by stacking a plurality of the power storage units 21.

### Power storage unit 21

The four power storage units 21 that constitute the stacked object 20 are, from the bottom, a first power storage unit 21A, a second power storage unit 21B, a third power storage unit 21C, and a fourth power storage unit 21D in the stated order. Each of the power storage units 21 (21A, 21B, 21C, 21D) includes holding members 30 attached to both ends in its longitudinal direction, a heat transfer member 19, and a power storage element 12.

### Heat transfer member 19

The heat transfer member 19 is a plate-shaped member made of a heat conductive material. In the present embodiment, aluminum or an aluminum alloy, which has excellent heat conductivity, is used as the heat conductive material. The holding members 30 made of an insulating resin material are attached to both ends in the longitudinal direction of the heat transfer member 19, and the power storage element 12 is placed on the upper surface of the heat transfer member 19.

### Power storage element 12

Any power storage elements 12 such as secondary batteries, capacitors, or condensers may be used as the power storage elements 12 that constitute the power storage element group 11 as needed. A secondary battery is used as the power storage element 12 according to the present embodiment.

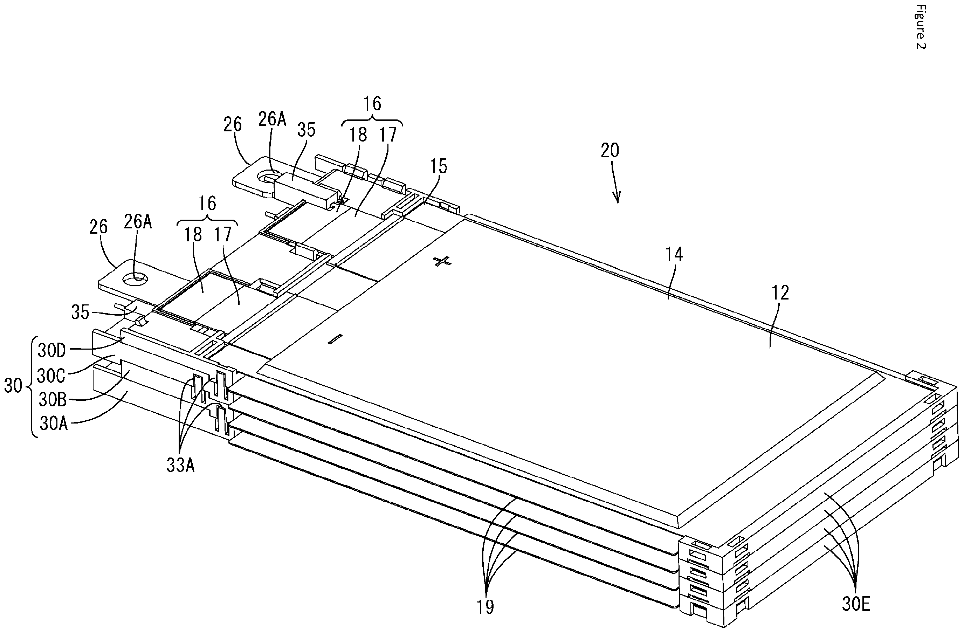

As shown in FIG. 2, the power storage elements 12 have an approximately rectangular shape when viewed from above. Each power storage element 12 includes a container 14 obtained by welding side edges of a pair of laminate films each having an approximately rectangular shape, a power storage element (not shown) that is accommodated inside the container 14, and lead terminals 13 that are connected to the power storage element inside the container 14 and drawn from the side edges of the container 14 to the outside.

### Lead terminal 13

In the present embodiment, the lead terminals 13 of the cathode and the anode (cathode lead terminal 13A and anode lead terminal 13B) are drawn from the edge on one side (front side edge) of the container 14. In the present embodiment, a corner 15 at the protruding end of the lead terminals 13 is fitted to a power storage element holding portion 31 of the holding member 30, restricting movement of the power storage element 12.

In the present embodiment, the lead terminals 13 of the four power storage elements 12 have different shapes. To distinguish the four power storage elements 12, the power storage element 12 of the first power storage unit 21A is denoted as the first power storage element 12A, the power storage element 12 of the second power storage unit 21B is denoted as the second power storage element 12B, the power storage element 12 of the third power storage unit 21C is denoted as the third power storage element 12C, and the power storage element 12 of a fourth power storage unit 21D is denoted as the fourth power storage element 12D.

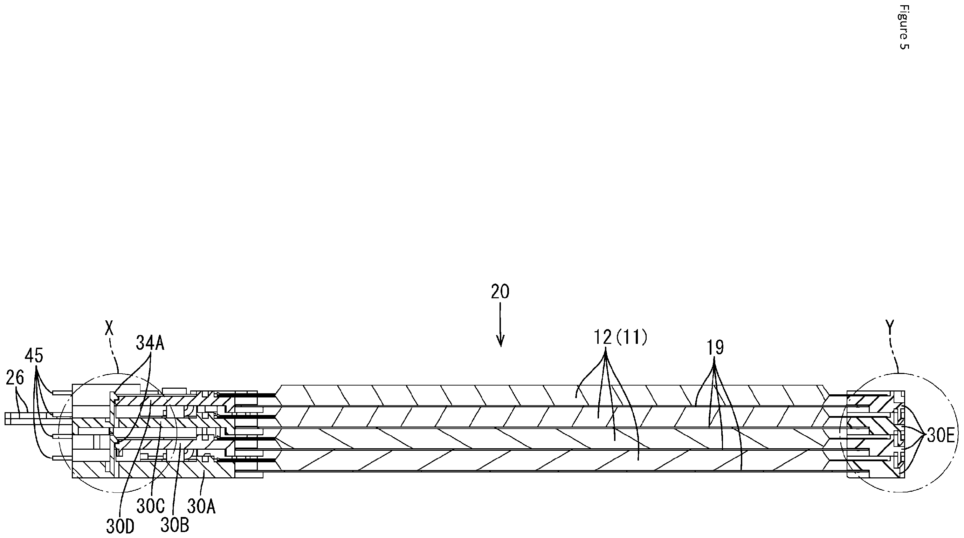

In the present embodiment, each lead terminal 13 is provided with a terminal connection portion 17 for electrically connecting lead terminals 13 that are adjacent in the direction in which the power storage elements 12 are stacked (the vertical direction in FIG. 5), and a detection terminal portion 18 that is electrically connectable to a device (not shown) for detecting and controlling a state of the power storage element 12.

In the present embodiment, a protruding end (rear side) of a protruding portion 16 that protrudes from the container 14 of each lead terminal 13 to the outside of the container 14, is a terminal connection portion 17 made of aluminum or an aluminum alloy, and its forward end (front side) is a detection terminal portion 18 made of copper or a copper alloy.

Bus bars 25 are connected to the terminal connection portions 17 of the lead terminals 13 of the power storage elements 12 that are adjacent in the direction in which the power storage elements 12 are stacked. In the present embodiment, the power storage elements 12 that are placed on each other in the stacking direction are connected in series by electrically connecting the lead terminals 13 having opposite polarities via the bus bars 25.

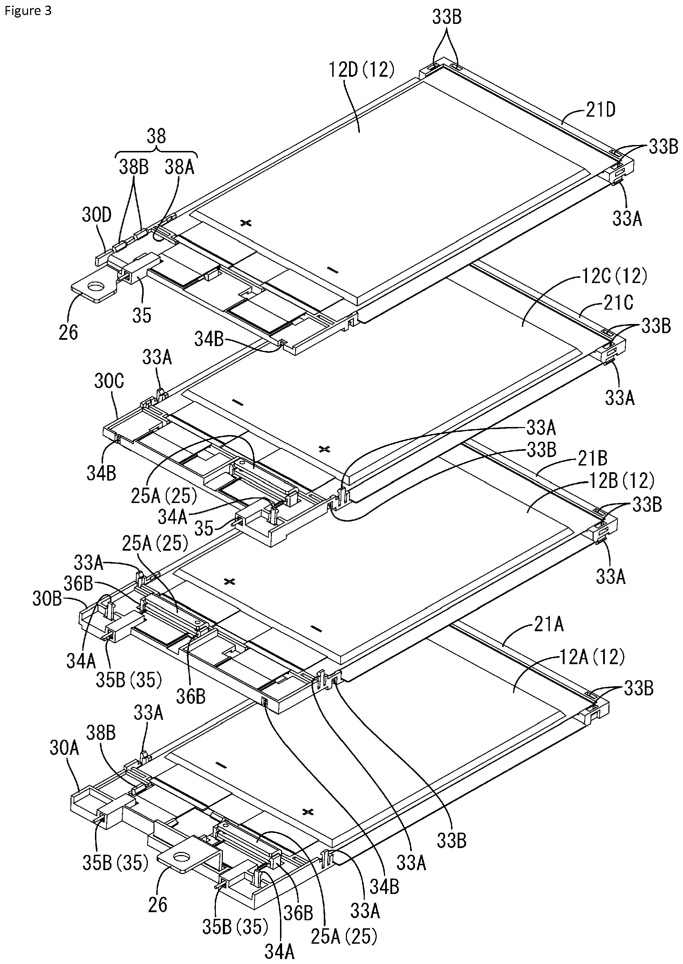

As shown in FIG. 3, an external connection bus bar 26 that is can be electrically connected to an external device (not shown) is connected to the terminal connection portion 17 of the anode lead terminal 13B of the first power storage element. Also, an external connection bus bar 26 that can be electrically connected to an external device is connected to the terminal connection portion 17 of the cathode lead terminal 13A of the fourth power storage element 12D. Examples of the external device include another electricity storage module and an inverter.

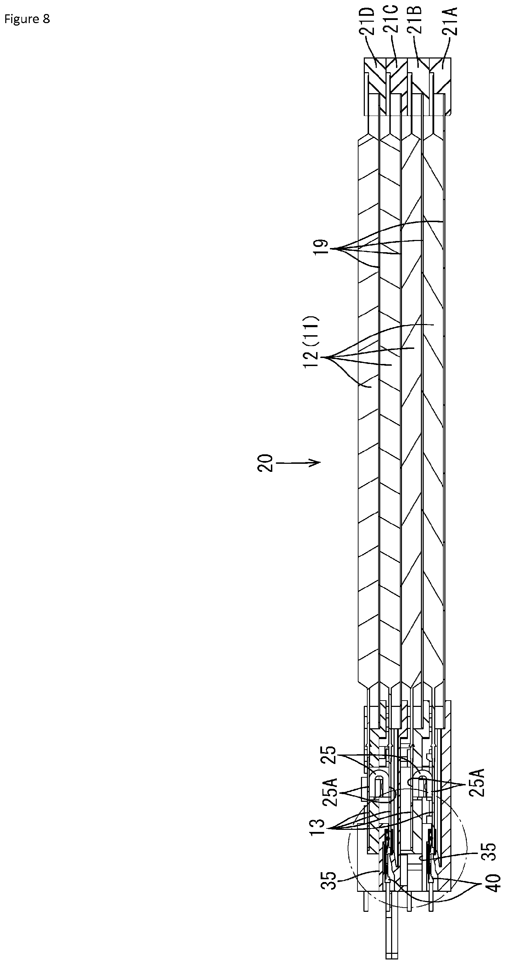

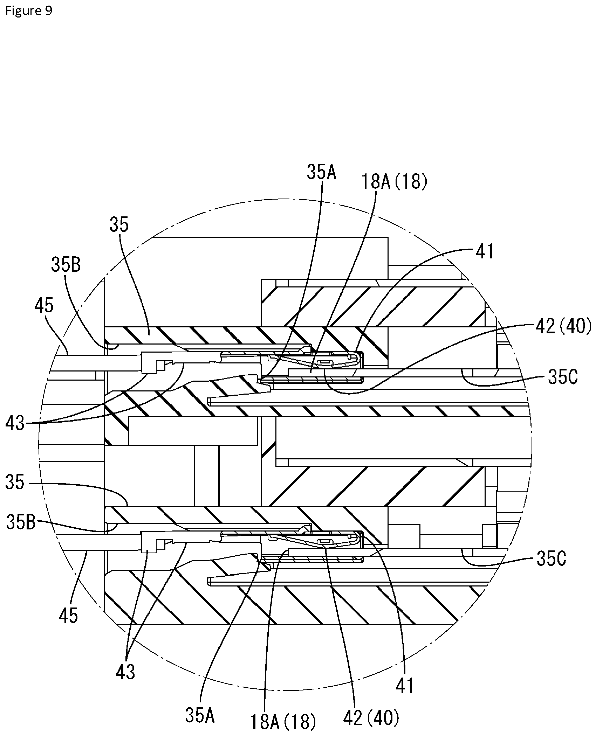

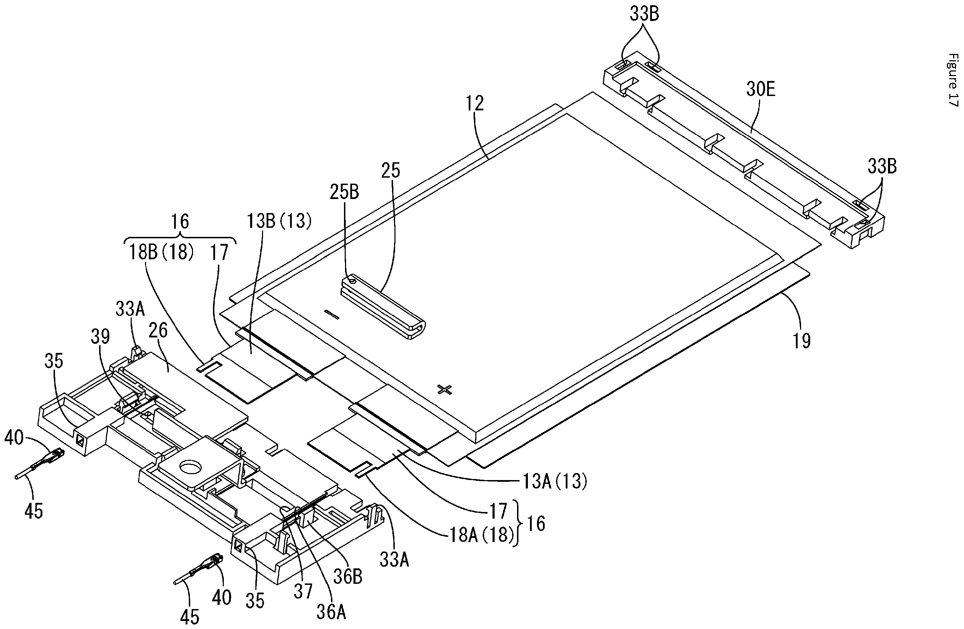

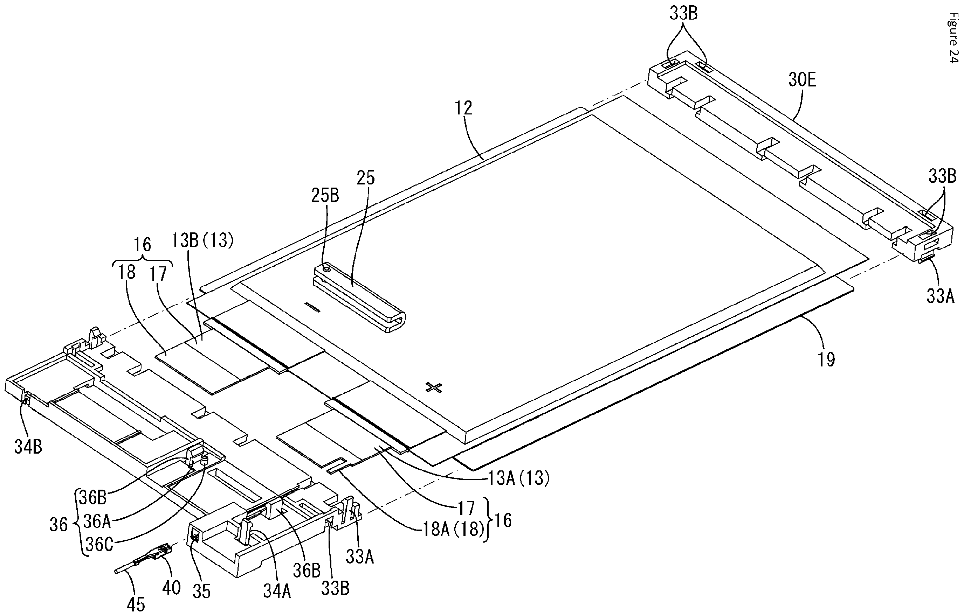

The detection terminal portion 18 of the cathode lead terminal 13A of each power storage element 12 and the detection terminal portion 18 of the anode lead terminal 13B of the first power storage element 12A are respectively provided with a terminal portion 18A having a tab shape resulting from cutting a portion of the lead terminal 13 (see FIGS. 17 and 24). As shown in FIGS. 8 and 9, the power storage elements 12 and a device for controlling the states of the power storage elements 12 are electrically connected by the terminal portions 18A being fitted to the terminals 40 (one example of the terminal 40 of the device) connected to the device for controlling the states of the power storage elements 12.

An example of the device for controlling the states of the power storage elements 12 is a device for controlling the voltage or temperature of the power storage elements 12, such as a battery control unit (ECU).

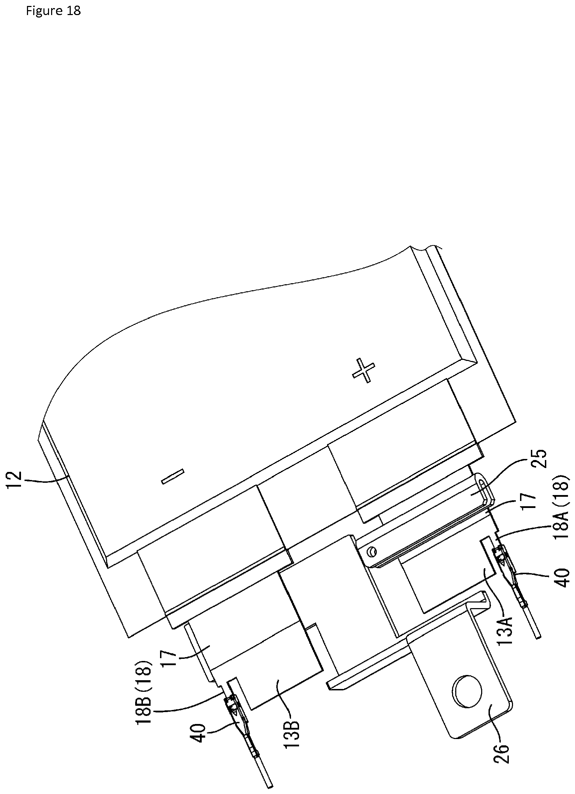

The terminal 40 of the device is a so-called female terminal as shown in FIGS. 18 and 24. Although details will be described later, the terminal 40 of the device is held in a terminal accommodation portion 35 in a retained state by being locked to a lance 35A formed on an inner wall of the terminal accommodation portion 35 provided in the holding member 30.

The detection terminal portion 18 of the lead terminal 13 and the terminal 40 of the device that is to be electrically connected to the detection terminal portion 18 are made of the same metal. The terminal 40 of the device is obtained by pressing a plate material made of copper or a copper alloy to a predetermined shape, for example, and is connected to a terminal end of an electric wire 45. The terminal 40 of the device includes, at a position opposite to a portion connected to the electric wire 45, a tubular connection portion 41 that is connected to the terminal portion 18A of the lead terminal 13. An elastic contact piece 42 that comes into elastic contact with the terminal portion 18A is disposed inside the connection portion 41. The lead terminal 13 and the device for controlling the states of the power storage elements 12 are electrically connected to each other via the terminal 40 of the device due to the terminal portion 18A and the elastic contact piece 42 coming into elastic contact with each other. The electric wire 45 is connected by crimping two barrel portions 43 of the terminal 40 of the device.

### Holding member 30

The electricity storage module of the present embodiment includes holding members 30A, 30B, 30C, and 30D for holding the lead terminals 13 of the power storage elements 12.

The holding members 30A, 30B, 30C, and 30D are provided with power storage element holding portions 31 each having a recessed shape into which the corner 15 of the lead terminal 13 of the power storage element 12 is fitted. Movement of the lead terminal 13 (the power storage element 12) is restricted by this power storage element holding unit 31.

In the present embodiment, four types of holding members 30A, 30B, 30C, and 30D that are attached to the front side edge (side edge from which the lead terminal 13 protrudes) of the power storage element 12, and a holding member 30E that is attached to the rear side edge of the power storage element 12 are used.

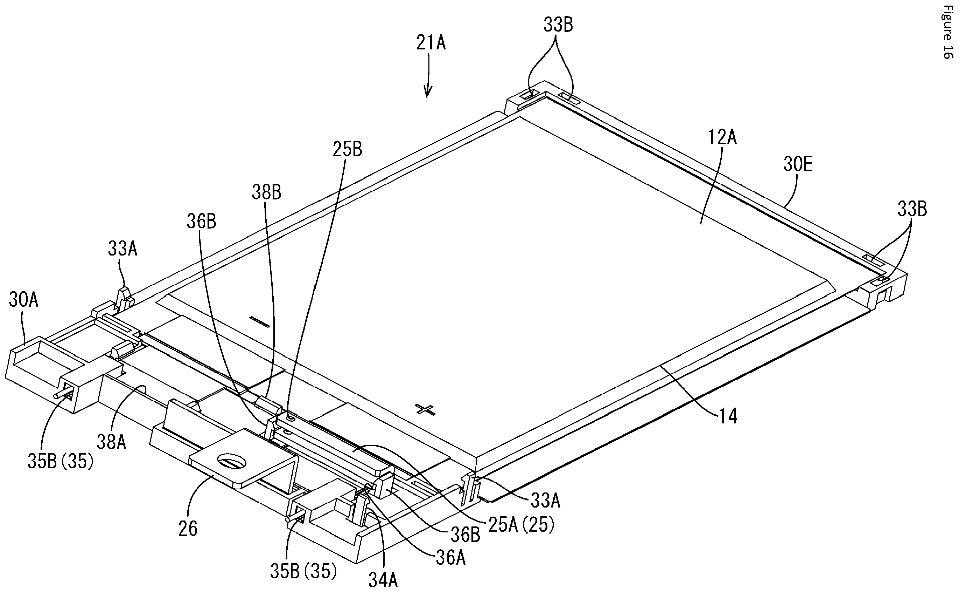

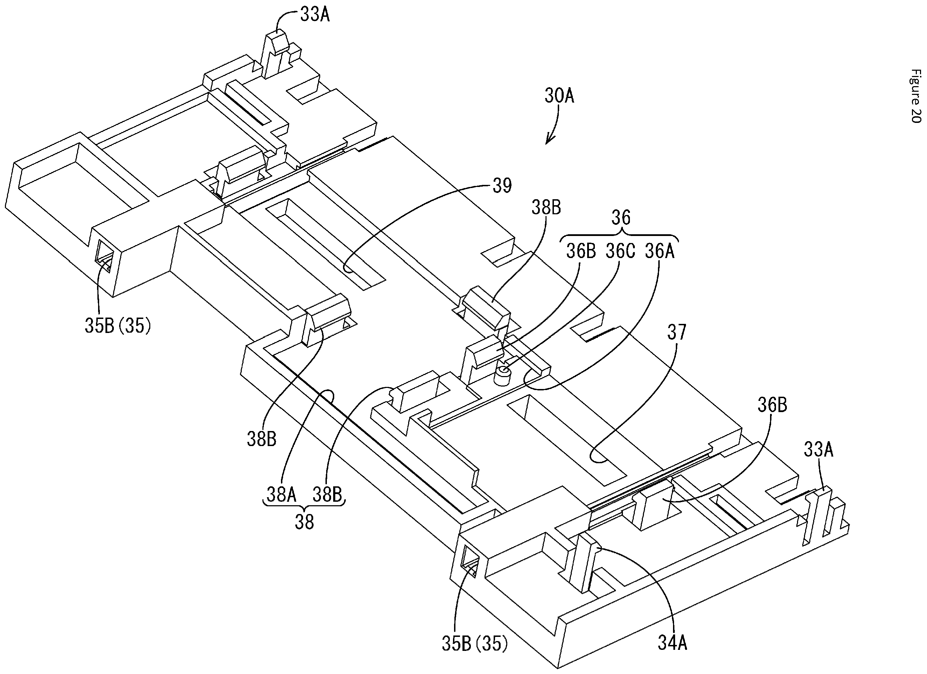

Specifically, a frontward one of the two holding members 30 that are part of the first power storage unit 21A is a first holding member 30A (see FIGS. 16 and 20), and a rearward one of those two holding members 30 is a fifth holding member 30E (see FIG. 16).

A frontward one of the two holding members 30 that are part of the second power storage unit 21B is a second holding member 30B, and a rearward one of those two holding members 30 is a fifth holding member 30E (see FIG. 3).

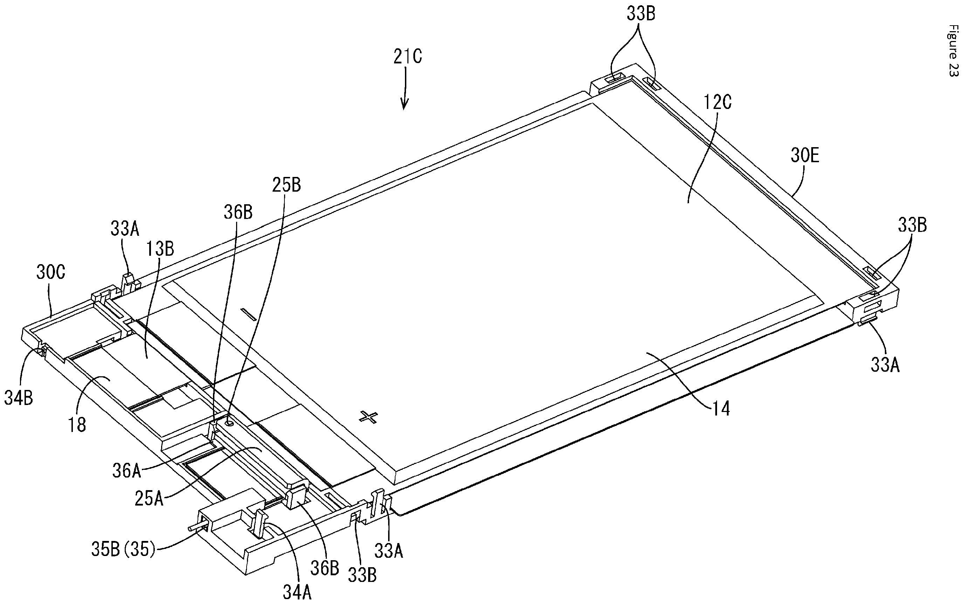

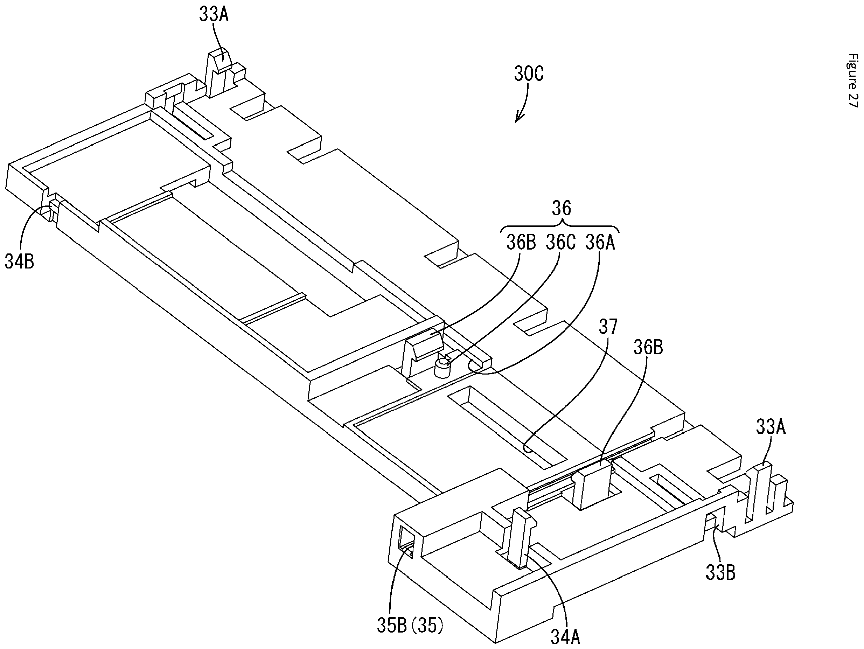

A frontward one of the two holding members 30 that are part of the third power storage unit 21C is a third holding member 30C (see FIGS. 23 and 27), and a rearward one of those two holding members 30 is a fifth holding member 30E (see FIG. 23).

A frontward one of the two holding members 30 that are part of the fourth power storage unit 21D is a fourth holding member 30D, and a rearward one of those two holding members 30 is a fifth holding member 30E (see FIG. 3).

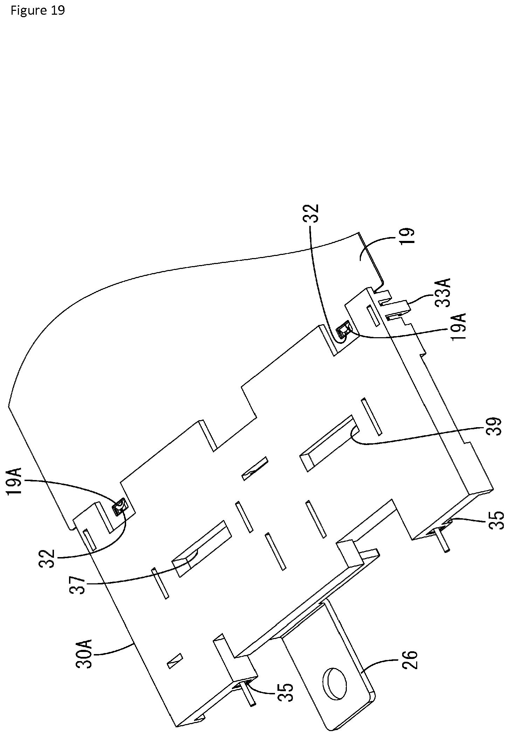

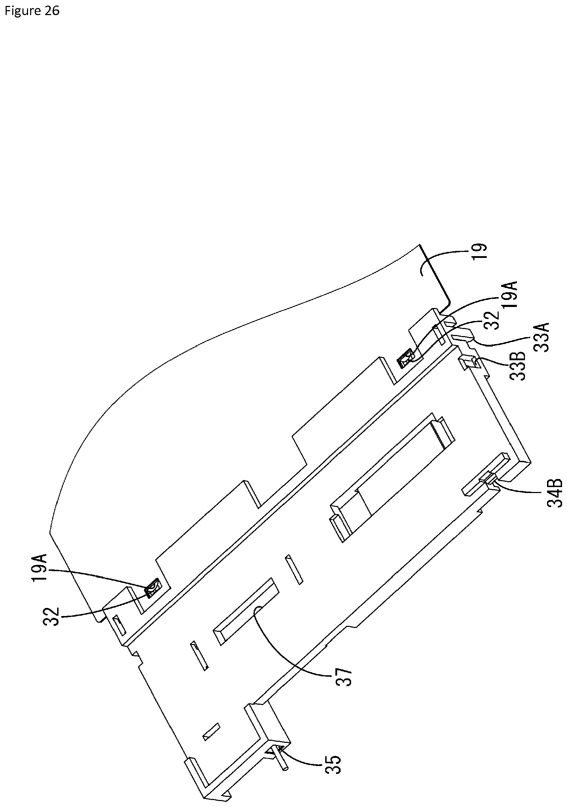

The holding members 30 (30A, 30B, 30C, 30D, and 30E) are each provided with heat transfer member attachment portions 32 that are attached to attachment holes 19A of the heat transfer member 19 (see FIGS. 19 and 26).

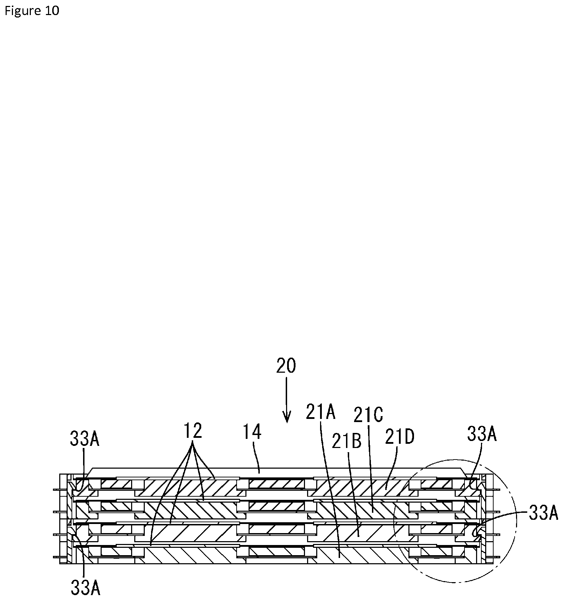

The holding members 30A, 30B, 30C, and 30D that are attached to the front side edge are locked to those holding members 30A, 30B, 30C, and 30D that are adjacent in the stacking direction (see FIG. 10).

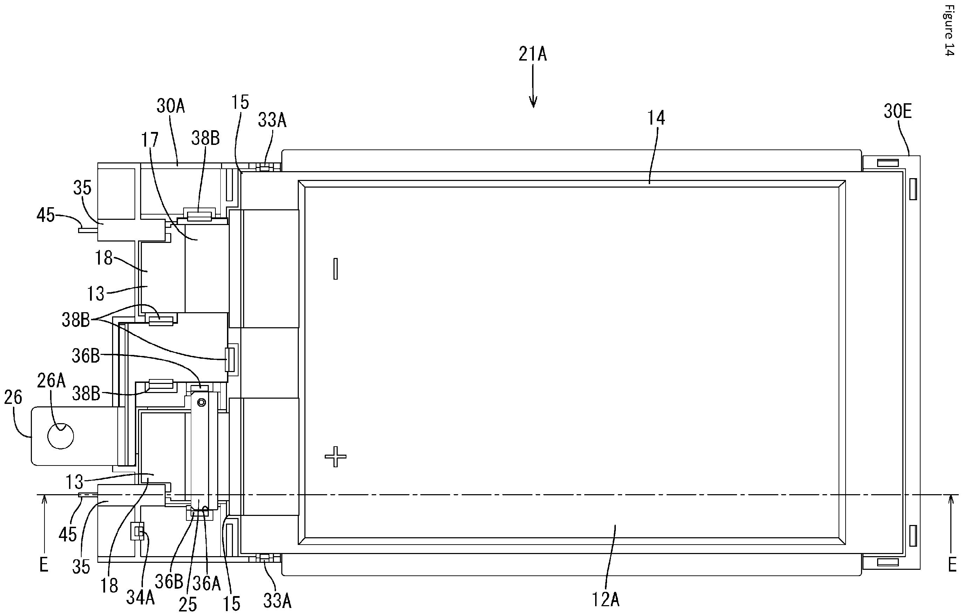

Specifically, in the first holding member 30A, the locking protrusions 33A for locking the second holding member 30B protrude upward from both end portions in its longitudinal direction (the vertical direction in FIG. 14).

In the second holding member 30B, locking holes 33B for receiving and locking the locking protrusions 33A of the first holding member 30A are formed at both ends in its longitudinal direction, and locking protrusions 33A for locking the third holding member 30C protrude upward at positions that are located next to the locking holes 33B.

In the third holding member 30C, locking holes 33B for receiving the locking protrusions 33A of the second holding member 30B are formed at both end portions in its longitudinal direction, and locking protrusions 33A for locking the fourth holding member 30D protrude upward at positions that are located next to the locking holes 33B.

In the fourth holding member 30D, the locking holes 33B for receiving the locking protrusions 33A of the third holding member 30C are formed at both ends in its longitudinal direction.

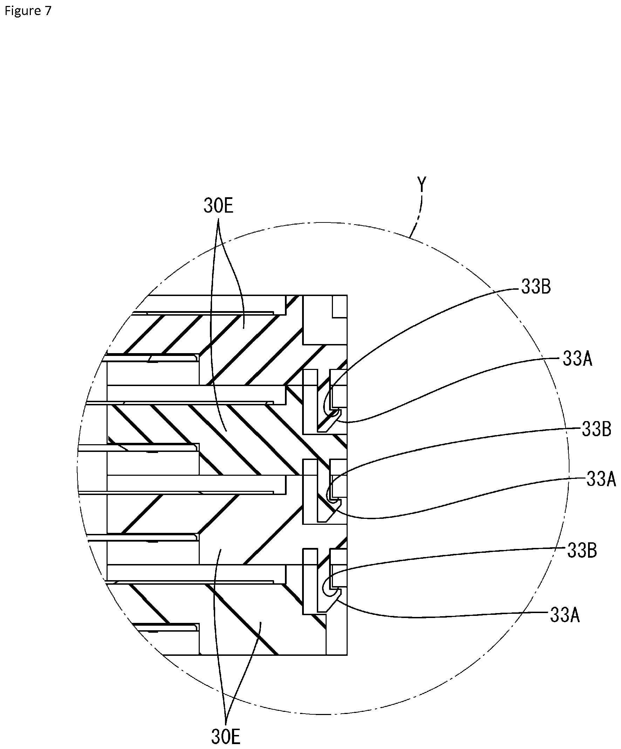

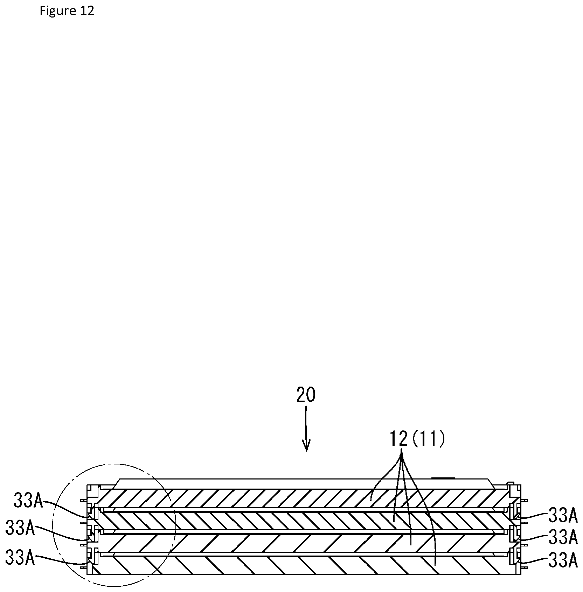

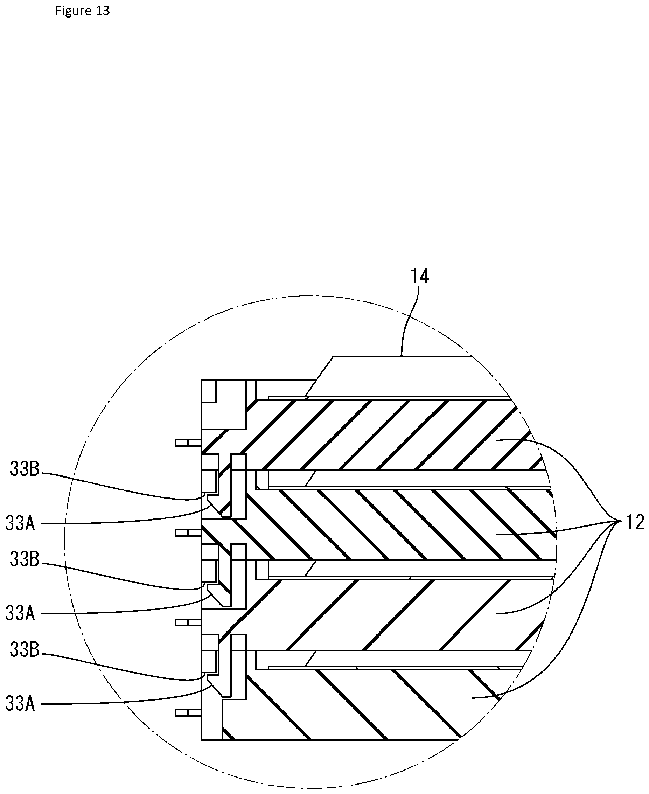

The fifth holding members 30E that are adjacent in the direction in which the power storage units 21 (power storage elements 12) are stacked are locked by the locking protrusions 33A of the fifth holding member 30E that is disposed above being locked, as shown in FIGS. 12 and 13, to the locking holes 33B of the fifth holding member 30E that is disposed below (see FIGS. 5, 7, 12, and 13). The fifth holding members 30E that are disposed in the first to third levels (stages) from the above are provided with four locking holes 33B and four locking protrusions 33A. The fifth holding member 30E that is disposed in the lowermost level is provided with four locking holes 33B. In the fifth holding member 30E, the locking protrusions 33A protrude downward (see FIGS. 7 and 13).

The holding members 30A, 30B, 30C, and 30D that are attached to the front side edge are positioned by the holding members 30A, 30B, 30C, and 30D that are adjacent to each other in the stacking direction (see FIGS. 3 to 6).

Specifically, in the first holding member 30A, a positioning protrusion 34A for positioning the second holding member 30B protrudes upward near its front end portion in FIG. 3.

In the second holding member 30B, a positioning hole 34B for receiving and positioning the positioning protrusion 34A is formed at a position corresponding to that of the positioning protrusion 34A of the first holding member 30A. Also, in the second holding member 30B, the positioning protrusion 34A for positioning the third holding member 30C protrudes upward near its back end portion in FIG. 3.

In the third holding member 30C, the positioning hole 34B for receiving and positioning the positioning protrusion 34A of the second holding member 30B is formed at a position corresponding to that of the positioning protrusion 34A of the second holding member 30B. Also, in the third holding member 30C, the positioning protrusion 34A for positioning the fourth holding member 30D protrudes upward near its front end portion in FIG. 3.

In the fourth holding member 30D, the positioning hole 34B for receiving and positioning the positioning protrusion 34A of the third holding member 30C is formed at a position corresponding to that of the positioning protrusion 34A of the third holding member 30C.

The first holding member 30A, the second holding member 30B, and the third holding member 30C each have a bus bar holding portion 36 for holding the bus bar 25 and the lead terminal 13, with the bus bar 25 and the lead terminal 13 being placed on each other.

The first holding member 30A and the fourth holding member 30D each have an external connection bus bar holding portion 38 for holding an external connection bus bar 26 and the lead terminal 13, with the external connection bus bar 26 and the lead terminal 13 being placed on each other.

The bus bar holding portion 36 includes a recess 36A into which the bus bar 25 can be fitted, retaining protrusions 36B for retaining the bus bar 25 that has been fitted to the recess 36A, and a bus bar holding protrusion 36C for receiving and holding a holding hole 25B formed in the bus bar 25. The recess 36A of the bus bar holding portion 36 is provided with a first welding hole 37 for joining the terminal connection portion 17 of the lead terminal 13 and the bus bar 25 (see FIGS. 20 and 27).

The external connection bus bar holding portion 38 includes a recess 38A into which the external connection bus bar 26 can be fitted, and retaining protrusions 38B for retaining the external connection bus bar 26 that has been fitted to the recess 38A. The recessed portion 38A of the external connection bus bar holding portion 38 is provided with a second welding hole 39 for joining the terminal connection portion 17 of the lead terminal 13 and the external connection bus bar 26.

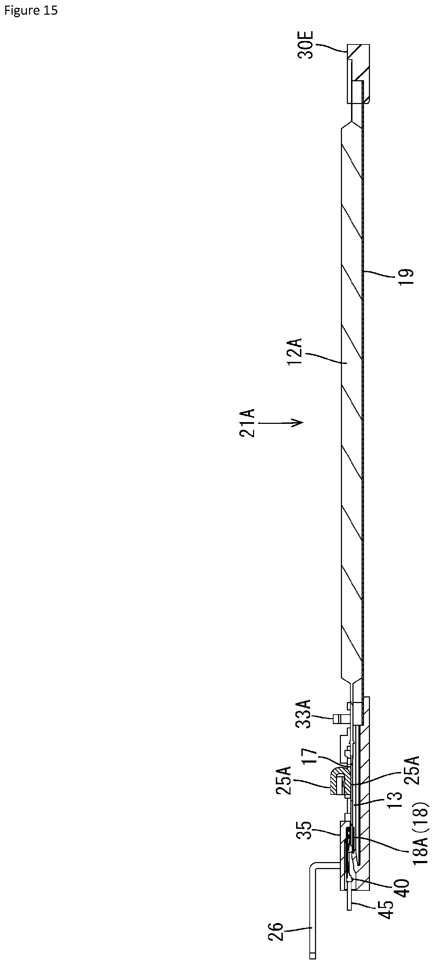

The lead connection portion 25A of the bus bars 25 is made of the same metal material as the terminal connection portion 17 of the lead terminals 13, the lead connection portion 25A being electrically connected to the terminal connection portion 17 of the lead terminals 13. The bus bars 25 are obtained by pressing a plate material made of aluminum or an aluminum alloy to a predetermined shape. The bus bars 25 are placed on the terminal connection portion 17 of the lead terminals 13 and joined thereto by welding. As shown in FIG. 15, each bus bar 25 has a U-shaped cross-section, and portions that are in contact with the two lead terminals 13 (lead connection portions 25A) are disposed spaced apart from each other in the vertical direction. A holding hole 25B for receiving a holding protrusion of the holding member 30 is formed at an end portion of the lead connection portion 25A of the bus bar 25.

Each external connection bus bar 26 is made of aluminum or an aluminum alloy, is placed on the terminal connection portion 17 of the lead terminal 13, and is joined with the terminal connection portion 17 by welding. An end portion of the external connection bus bar 26 protrudes frontward, and the end portion is provided with an external connection hole 26A that can be connected to an external connection terminal (not shown).

Examples of a method for welding the lead terminal 13 and the bus bar 25 and a method for welding the lead terminal 13 and the external connection bus bar 26 include laser welding and ultrasonic welding.

### Terminal accommodation portion 35

In the holding members 30A, 30B, 30C, and 30D that are attached to the front side edge, a region in which the detection terminal portion 18 of the cathode lead terminal 13A in the power storage element 12 is disposed is provided with a terminal accommodation portion 35 in which the terminal portion 18A formed in the detection terminal portion 18 is accommodated (see FIG. 1). In the first holding member 30A, also a region in which the detection terminal portion 18 of the anode lead terminal 13B in the power storage element 12 is disposed is provided with the terminal accommodation portion 35 (see FIG. 16).

As shown in FIG. 17, the terminal accommodation portion 35 has a tubular shape. A front opening of the terminal accommodation portion 35 serves as a terminal insertion port 35B into which a terminal 40 of the device is insertable. The rear of the terminal accommodation portion 35 is provided with a terminal arrangement portion 35C in which the terminal portion 18B formed in the detection terminal portion 18 is disposed. The terminal portion 18A formed in the detection terminal portion 18 and the terminal 40 of the device are accommodated in a fitted state, in which they are fitted together, in the terminal accommodation portion 35. As shown in FIG. 9, an inner wall of the terminal accommodation portion 35 is provided with a lance 35A for locking and retaining the connection portion 41 of the terminal 40 of the device.

### Method for assembling electricity storage module

Prepared are a heat transfer member 19 to which the first holding member 30A and a fifth holding member 30E are attached, a heat transfer member 19 to which the second holding members 30B and the fifth holding members 30E are attached, a heat transfer member 19 to which the third holding member 30C and a fifth holding member 30E are attached, and a heat transfer member 19 to which the fourth holding member 30D and a fifth holding member 30E are attached.

Predetermined external connection bus bars 26 are fitted to the recesses 38A of the external connection bus bar holding portions 38 of the first holding member 30A and the fourth holding member 30D. The terminals 40 of the device to which the electric wires 45 are connected are accommodated in the terminal accommodation portions 35 of the holding members 30A, 30B, 30C, and 30D that are attached to the front side edge.

Next, when the terminal portion 18A of the detection terminal portion 18 is inserted into the terminal accommodation portion 35 and is fitted to the terminal 40 of the device, the terminal portion 18A is disposed in the terminal arrangement portion 35C, and the terminal portion 18A provided in the detection terminal portion 18 of the lead terminal 13 in the terminal accommodation portion 35 and the terminal 40 of the device are fitted to each other and are electrically connected.

When the power storage element 12 is placed on the heat transfer member 19 and the corner 15 of the lead terminal 13 is fitted to the power storage element holding portion 31 of the holding member 30, the respective power storage unit 21 is obtained. At this time, in the first power storage unit 21A and the fourth power storage unit 21D, the terminal connection portion 17 of the lead terminal 13 and the external connection bus bar 26 are placed on one another and disposed above the second welding hole 39.

Next, the bus bars 25 are attached to the bus bar holding portions 36 of the first holding member 30A, the second holding member 30B, and the third holding member 30C. Specifically, the bus bar holding protrusion 36C provided in the holding member 30 is fitted to the holding hole 25B of the bus bar 25, the bus bar 25 is fitted to the recess 36A, and the bus bar 25 is retained by the retaining protrusions 36B. At this time, in each power storage unit 21, the bus bar 25 and the terminal connection portion 17 of the lead terminal 13 are placed on one another and disposed above the first welding hole 37.

Next, the lead terminal 13 and the bus bar 25 that are placed on the first welding hole 37 are joined through the first welding hole 37 by laser welding, and the external connection bus bar 26 and the lead terminal 13 that are placed on one another above the second welding hole 39 are joined through the second welding hole 39 by laser welding.

Then, in the first holding member 30A, the cathode lead terminal 13A and the bus bar 25 are joined, and the external connection bus bar 26 and the anode lead terminal 13B are joined (see FIG. 16). In the first power storage unit 21A, the external connection bus bar 26 is disposed below the anode lead terminal 13B (see FIG. 18).

The cathode lead terminal 13A and the bus bar 25 are joined in the second holding member 30B, and the cathode lead terminal 13A and the bus bar 25 are joined in the third holding member 30C. The cathode lead terminal 13A and the external connection bus bar 26 are joined in the fourth holding member 30D.

Next, four power storage units 21 are stacked to produce the stacked object (stack) 20. The second power storage unit 21B is placed on the first power storage unit 21A, the locking protrusions 33A of the first holding member 30A are locked to the locking holes 33B of the second holding member 30B, and the positioning protrusions 34A of the first holding member 30A are fitted to the positioning holes 34B of the second holding member 30B. The locking protrusions 33A of the fifth holding member 30E in the second power storage unit 21B are locked to the locking holes 33B of the holding member 30E in the first power storage unit 21A. Thus, the anode lead terminal 13B of the second power storage element 12B is positioned with respect to the bus bar 25 that has been joined to the cathode lead terminal 13A of the first power storage element 12A.

The anode lead terminal 13B of the second power storage element 12B and the lead connection portion 25A disposed above the bus bar 25 that has been joined to the cathode lead terminal 13A of the first power storage element 12A are joined by laser welding. Thus, the second power storage unit 21B is stacked on the first power storage unit 21A.

The third power storage unit 21C is then placed on the second power storage unit 21B that has been stacked on the first power storage unit 21A, the locking protrusions 33A of the second holding member 30B are locked to the locking holes 33B of the third holding member 30C, and the positioning protrusions 34A of the second holding member 30B are fitted to the positioning holes 34B of the third holding member 30C. The locking protrusions 33A of the fifth holding member 30E in the third power storage unit 21C are locked to the locking holes 33B of the fifth holding member 30E in the second power storage unit 21B. Thus, the anode lead terminal 13B of the third power storage element 12C is positioned with respect to the bus bar 25 that has been joined to the cathode lead terminal 13A of the second power storage element 12B.

The anode lead terminal 13B of the third power storage element 12C and the lead connection portion 25A disposed above the bus bar 25 that has been joined to the cathode lead terminal 13A of the second power storage element 12B are joined by laser welding. Thus, the third power storage unit 21C is stacked on the second power storage unit 21B.

The fourth power storage unit 21D is placed on the third power storage unit 21C that is stacked on the first power storage unit 21A and the second power storage unit 21B, the locking protrusions 33A of the third holding member 30C are locked to the locking holes 33B of the fourth holding member 30D, and the positioning protrusions 34A of the third holding member 30C are fitted to the positioning holes 34B of the fourth holding member 30D. The locking protrusions 33A of the fifth holding member 30E in the fourth power storage unit 21D are locked to the locking holes 33B of the fifth holding member 30E in the third power storage unit 21C. Thus, the anode lead terminal 13B of the fourth power storage element 12D is positioned with respect to the bus bar 25 that has been joined to the cathode lead terminal 13A of the third power storage element 12C.

The anode lead terminal 13B of the fourth power storage element 12D and the lead connection portion 25A disposed above the bus bar 25 that has been joined to the cathode lead terminal 13A of the third power storage element 12C are joined by laser welding. Thus, the fourth power storage unit 21D is stacked on the third power storage unit 21C, and the stacked object 20 shown in FIGS. 1 and 2 is obtained. When the stacked object 20 is accommodated in a case, an electricity storage module is obtained.

### Functional effects and effects of present embodiment

Subsequently, the functional effects and effects of the present embodiment will be described.

In the present embodiment, the lead terminals 13 are provided with a terminal connection portion 17 for electrically connecting adjacent lead terminals 13, and a detection terminal portion 18 for detecting the state of the power storage element 12, and thus it is not necessary to provide a separate detection terminal for detecting the state of the power storage element 12, and an operation for connecting the lead terminal 13 and the detection terminal is not required. As a result, according to the present embodiment, it is possible to provide an electricity storage module in which the operation for connecting the detection terminal and the power storage element 12 is simplified.

Also, according to the present embodiment, the detection terminal portion 18 of the lead terminal 13 and the terminal 40 of the device that is to be electrically connected to the detection terminal portion 18 are made of the same metal, and thus a problem of corrosion caused by contact between different metals does not easily arise in a portion of contact between the detection terminal portion 18 of the lead terminal 13 and the terminal 40 of the device.

Also, according to the present embodiment, since the holding member 30 is provided with the terminal accommodation portion 35 in which the detection terminal portion 18 and the terminal 40 of the device are accommodated in a fitted state, the detection terminal portion 18 of the lead terminal 13 is accommodated in the terminal accommodation portion 35 of the holding member 30, and the power storage element 12 and the device are electrically connected to each other by inserting the terminal 40 of the device into the terminal accommodation portion 35 and fitting the terminal 40 to the detection terminal portion 18, and thus the operation for connecting the power storage element 12 and the device can be further simplified.

Also, according to the present embodiment, since the lead connection portion 25A of the bus bar 25 is made of the same metal as the terminal connection portion 17 of the lead terminal 13, the lead connection portion 25A being electrically connected to the terminal connection portion 17 of the lead terminal 13, a problem of corrosion caused by contact between different metals does not easily arise in a portion of contact between the terminal connection portion 17 of the lead terminal 13 and the lead connection portion 25A of the bus bar 25.

### Other Embodiments

The present invention is not limited to the embodiment described above using the foregoing description and drawings, and embodiments such as the following are also encompassed in the technical scope of the present invention.
(1) Although in the above-described embodiment, the detection terminal portion 18 of the lead terminal 13 and the terminal 40 of the device that is electrically connected to the detection terminal portion 18 are made of the same metal, the detection terminal portion and the terminal of the device may be made of different metals.
(2) Although in the above-described embodiment, a lead terminal 13 having a detection terminal portion 18 made of copper or a copper alloy has been described, there is no limitation to this. For example, the lead terminal may have a detection terminal portion made of aluminum, an aluminum alloy, or stainless steel.
(3) Although in the above-described embodiment, an example has been described that includes holding members 30 provided with a terminal accommodation portion 35, a configuration may also be adopted in which a connector having a terminal accommodation portion is provided separately from the holding member.
(4) Although in the above-described embodiment, bus bars 25 have been described in which the lead connection portion 25A that is electrically connected to the terminal connection portion 17 of the lead terminal 13 is made of the same metal material as the terminal connection portion 17 of the lead terminal 13, a configuration may also be adopted in which the terminal connection portion of the lead terminal and the lead connection portion of the bus bar are made of different metal materials.
(5) Although in the above-described embodiment, the lead terminals 13 have been described as having a terminal connection portion 17 made of aluminum or an aluminum alloy, there is no limitation to this. For example, the lead terminals may have a terminal connection portion made of copper, a copper alloy, or stainless steel.
(6) Although in the above-described embodiment, lead terminals 13 have been described in which the terminal connection portion 17 and the detection terminal portion 18 are made of different metal materials, lead terminals may be adopted in which the terminal connection portion and the detection terminal portion are made of the same metal material.

### Reference Signs List

- 11: Power storage element group
- 12: Power storage element
- 12A: First power storage element
- 12B: Second power storage element
- 12C: Third power storage element
- 12D: Fourth power storage element
- 13: Lead terminal
- 13A: Cathode lead terminal
- 13B: Anode lead terminal
- 16: Protruding portion
- 17: Terminal connection portion
- 18: Detection terminal portion
- 18A: Terminal portion
- 20: Stacked object
- 21: Power storage unit
- 21A: First power storage unit
- 21B: Second power storage unit
- 21C: Third power storage unit
- 21D: Fourth power storage unit
- 25: Bus bar
- 25A: Lead connection portion
- 25B: Holding hole
- 30: Holding member
- 30A: First holding member
- 30B: Second holding member
- 30C: Third holding member
- 30D: Fourth holding member
- 35: Terminal accommodation portion
- 35A: Lance
- 35B: Terminal insertion port
- 35C: Terminal arrangement portion
- 40: Terminal of device
- 41: Connection portion
- 42: Elastic contact piece
- 43: Barrel portion
- 45: Electrical wire

## Claims

1. An electricity storage module comprising a power storage element group (**11**) obtained by stacking a plurality of power storage elements (**12**) each having a lead terminal (**13**) that protrudes from a side edge,
wherein the lead terminals are each provided with a terminal connection portion (**17**) for electrically connecting the lead terminals that are adjacent in a direction in which the power storage elements are stacked, and
a detection terminal portion (**18**) that is electrically connectable to a device for detecting and controlling states of the respective power storage element,
the lead terminals (**13**) each include a protruding portion (**16**) that protrudes from the side edge of the power storage element,
the terminal connection portions (**17**) are located on a protruding end of the protruding portions, and the detection terminal portion (**18**) is located on a frontward end of the protruding portions, and
one end portion of the detection terminal portion (**18**) that is orthogonal to a direction in which the lead terminals protrude is provided with a terminal portion (**18A**) having a tab shape that is electrically connectable to the device, **characterized in that**
the detection terminal portion (18) is provided with the terminal portion (**18A**) to be fitted to a terminal (40) connected to the device.

2. The electricity storage module according to claim 1, wherein the detection terminal portions of the lead terminals and terminals of the device that is to be electrically connected to the detection terminal portions are made of the same metal material.

3. The electricity storage module according to claim 2, comprising
holding members for holding the lead terminals of the power storage elements,
wherein the holding members are provided with terminal accommodation portions in which the detection terminal portions and the terminals of the device are accommodated in a fitted state.

4. The electricity storage module according to any one of claims 1 to 3, comprising
a bus bar for electrically connecting the lead terminals of the power storage elements that are adjacent in the direction in which the power storage elements are stacked,
wherein a lead connection portion of the bus bar, which is electrically connected to the terminal connection portion of the lead terminal, is made of the same metal material as the terminal connection portion of the lead terminal.

5. The electricity storage module according to any one of claims 1 to 4, further including holding members (**30**) for holding the lead terminals (**13**), wherein the holding members (30) are provided with terminal accommodation portions (**35**) in which the detection terminal portions (**18**) and the terminals of the device are accommodated in a fitted state.

## Patentansprüche

1. Elektrizitätsspeichermodul, umfassend eine Leistungsspeicherelementgruppe (11), die durch Stapeln einer Mehrzahl von Leistungsspeicherelementen (12) erhalten wird, die jeweils einen Leitungsanschluss (13) aufweisen, der von einer Seitenkante vorsteht,
wobei die Leitungsanschlüsse jeweils mit einem Anschlussverbindungsabschnitt (17) zum elektrischen Verbinden der Leitungsanschlüsse versehen sind, die in einer Richtung benachbart bzw. angrenzend sind, in der die Leistungsspeicherelemente gestapelt sind, und
einen Erfassungsanschlussabschnitt (18), der elektrisch mit einer Vorrichtung zum Erfassen und Steuern bzw. Regeln von Zuständen des jeweiligen Leistungsspeicherelements verbindbar ist,
wobei die Leitungsanschlüsse (13) jeweils einen vorstehenden Abschnitt (16) enthalten, der von der Seitenkante des Leistungsspeicherelements vorsteht, wobei sich die Anschlussverbindungsabschnitte (17) an einem vorstehenden Ende der vorstehenden Abschnitte befinden und sich der Erfassungsanschlussabschnitt (18) an einem vorderen Ende der vorstehenden Abschnitte befindet, und
wobei ein Endabschnitt des Erfassungsanschlussabschnitts (18), der orthogonal zu einer Richtung ist, in der die Leitungsanschlüsse vorstehen, mit einem Anschlussabschnitt (18A) mit einer Laschen- bzw. Kontaktstiftform versehen ist, der elektrisch mit der Vorrichtung verbindbar ist, **dadurch gekennzeichnet, dass**
der Erfassungsanschlussabschnitt (18) mit dem Anschlussabschnitt (18A) versehen ist, der an einen Anschluss (40) zu passen ist, der mit der Vorrichtung verbunden ist.

2. Elektrizitätsspeichermodul nach Anspruch 1, wobei die Erfassungsanschlussabschnitte der Leitungsanschlüsse und Anschlüsse der Vorrichtung, die elektrisch mit den Erfassungsanschlussabschnitten zu verbinden sind, aus dem gleichen Metallmaterial bestehen.

3. Elektrizitätsspeichermodul nach Anspruch 2, umfassend Halteglieder zum Halten der Leitungsanschlüsse der Leistungsspeicherelemente,
wobei die Halteglieder mit Anschlussunterbringungs- bzw. -aufnahmeabschnitten versehen sind, in denen die Erfassungsanschlussabschnitte und die Anschlüsse der Vorrichtung in einem gepassten Zustand untergebracht bzw. aufgenommen sind

4. Elektrizitätsspeichermodul nach einem der Ansprüche 1 bis 3, umfassend eine Sammelschiene zum elektrischen Verbinden der Leitungsanschlüsse der Leistungsspeicherelemente, die in der Richtung benachbart bzw. angrenzende sind, in der die Leistungsspeicherelemente gestapelt sind,
wobei ein Leitungsverbindungsabschnitt der Sammelschiene, der elektrisch mit dem Anschlussverbindungsabschnitt des Leitungsanschlusses verbunden ist, aus dem gleichen Metallmaterial besteht wie der Anschlussverbindungsabschnitt des Leitungsanschlusses.

5. Elektrizitätsspeichermodul nach einem der Ansprüche 1 bis 4, ferner enthaltend Halteglieder (30) zum Halten der Leitungsanschlüsse (13), wobei die Halteglieder (30) mit Anschlussunterbringungs- bzw. -aufnahmeabschnitten (35) versehen sind, in denen die Erfassungsanschlussabschnitte (18) und die Anschlüsse der Vorrichtung in einem gepassten Zustand untergebracht bzw. aufgenommen sind.

## Revendications

1. Module de stockage d'électricité comprenant un groupe d'éléments de stockage d'énergie (11) obtenu en empilant une pluralité d'éléments de stockage d'énergie (12), chacun comportant une borne principale (13) qui s'étend à partir d'un bord latéral,
dans lequel les bornes principales comportent chacune une partie de raccordement de borne (17) destinée a raccorder électriquement les bornes principales qui sont adjacentes suivant une direction dans laquelle les éléments de stockage d'énergie sont empilés, et
une partie de borne de détection (18) qui peut être raccordée électriquement à un dispositif destiné à détecter et commander des états de l'élément de stockage d'énergie respectif,
les bornes principales (13) comportent chacune une partie en saillie (16) qui s'étend à partir du bord latéral de l'élément de stockage d'énergie,
les parties de raccordement de borne (17) sont situées sur une extrémité en saillie des parties en saillie, et la partie de borne de détection (18) est située sur une extrémité avant des parties en saillie, et
une première partie d'extrémité de la partie de borne de détection (18) qui est orthogonale à une direction dans laquelle s'étendent les bornes principales comporte une partie de borne (18A) présentant une forme de patte qui peut être raccordée électriquement au dispositif, **caractérisé en ce que**
la partie de borne de détection (18) comporte la partie de borne (18A) destinée à être couplée à une borne (40) raccordée au dispositif.

2. Module de stockage d'électricité selon la revendication 1, dans lequel les parties de borne de détection des bornes principales et des bornes du dispositif qui doivent être raccordées électriquement aux parties de borne de détection sont réalisées à base du même matériau métallique.

3. Module de stockage d'électricité selon la revendication 2, comprenant
des éléments de retenue destinés à maintenir les bornes principales des éléments de stockage d'énergie,
dans lequel les éléments de retenue sont équipés de parties de réception de borne dans lesquelles les parties de borne de détection et les bornes du dispositif sont reçues dans un état couplé,

4. Module de stockage d'électricité selon l'une quelconque des revendications 1 à 3, comprenant
une barre de bus destinée à raccorder électriquement les bornes principales des éléments de stockage d'énergie qui sont adjacentes dans la direction dans laquelle les éléments de stockage d'énergie sont empilés,
dans lequel une partie de raccordement de borne de la barre de bus, qui est raccordée électriquement à la partie de raccordement de borne de la borne principale, est réalisée à base du même matériau métallique que la partie de raccordement de borne de la borne principale.

5. Module de stockage d'électricité selon l'une quelconque des revendications 1 à 4, comportant, en outre, des éléments de retenue (30) destinés à retenir les bornes principales (13), dans lequel les éléments de retenue (30) sont équipés de parties de réception de borne (35) dans lesquelles les parties de borne de détection (18) et les bornes du dispositif sont reçues dans un état couplé.
